(19) Europäisches Patentamt
European Patent Office
Office européen des brevets

(11) Veröffentlichungsnummer: **0 070 490**
**B1**

# (12) EUROPÄISCHE PATENTSCHRIFT

(45) Veröffentlichungstag der Patentschrift: **20.03.85**

(51) Int. Cl.⁴: **C 09 B 67/10**

(21) Anmeldenummer: **82106219.7**

(22) Anmeldetag: **12.07.82**

(54) **Verfahren zur Verbesserung der anwendungstechnischen Eigenschaften von Pigment Yellow 13.**

(30) Priorität: **16.07.81 DE 3128057**

(43) Veröffentlichungstag der Anmeldung: **26.01.83 Patentblatt 83/4**

(45) Bekanntmachung des Hinweises auf die Patenterteilung: **20.03.85 Patentblatt 85/12**

(84) Benannte Vertragsstaaten: **CH DE FR GB LI**

(56) Entgegenhaltungen:
**CH - A - 407 170**
**DE - A - 2 059 675**
**FR - A - 1 180 748**
**FR - A - 2 214 728**
**FR - A - 2 214 730**
**FR - A - 2 221 502**
**US - A - 3 991 044**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Hunger, Klaus, Dr., Johann-Strauss-Strasse 35, D-6233 Kelkheim Taunus (DE)**
Erfinder: **Rieper, Wolfgang, Dr., Sternstrasse 11, D-6000 Frankfurt am Main (DE)**

**EP 0 070 490 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Im Rahmen der Bemühungen, anorganische bleihaltige Pigmente wie Chromgelbmarken durch bleifreie Produkte zu ersetzen, wurde von E. Schoohf („Inndustrie- und Automobillacke mit und ohne bleihaltige Pigmente", Handbuch S. 501-506, XI. Fatipec Kongress, Florenz 11.- 16.6.72, Mailand 1972) vorgeschlagen, auf dem Lacksektor im Gelbbereich Kombinationen von organischen Gelbpigmenten der Tetrachlorisoindolinonreihe mit Nickeltitangelb und Eisenoxidgelb einzusetzen. Für die Anwendung in Druckfarben wird in der DE-OS Nr. 3001237 empfohlen, Azopigmente durch Mischkupplung in Gegenwart von hochdispergierten anorganischen Materialien wie Eisenoxid, Titandioxid, Bariumsulfat, Aluminiumhydroxid, Tonen oder Mischungen davon herzustellen, um eine innige Verbindung zwischen dem anorganischen Material und dem organischen Pigmentgemisch hervorzurufen.

Die Herstellung von zwei hochdeckenden, rein organischen Gelbpigmenten, nämlich C.I. Pigment Yellow 16 und 83, ist bereits bekannt (DE-AS Nrn. 2302481 und 2302509). Hierbei werden die nach der Kupplung erhaltenen Produkte in einem Gemisch aus Wasser und einem mit Wasser nicht oder nicht unbegrenzt mischbaren organischen Lösemittel auf Temperaturen oberhalb 100° C erhitzt.

Es wurde nun gefunden, dass die anwendungstechnischen Eigenschaften des Disazopigments C.I. Pigment Yellow 13, C.I. 21 100, der Formel

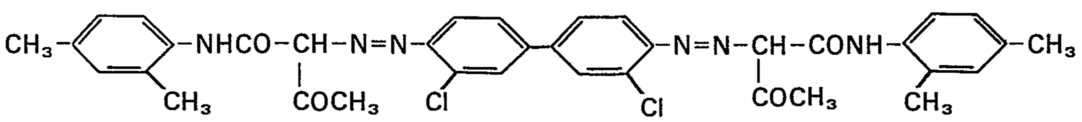

insbesondere die Viskosität und Deckkraft beim Einsatz in Druckfarben, in einem einfachen Verfahren so verbessert werden können, dass damit bleihaltige Chromgelbpigmente vergleichbarer Nuance ersetzt werden können.

Die Erfindung betrifft deshalb ein Verfahren zur Verbesserung der Deckkraft und der Viskosität von Zubereitungen von Pigment Yellow 13, das dadurch gekennzeichnet ist, dass das Rohpigment, in Gegenwart eines Tensides, in wässeriger Suspension auf Temperaturen über 100°C erhitzt wird.

Man kann hierzu ein isoliertes und ggf. gewaschenes Rohpigment in Wasser, unter Zusatz eines Tensides, dispergieren, vorzugsweise setzt man jedoch für die erfindungsgemässe Nachbehandlung die nach der Umsetzung von bisdiazotiertem 3,3' -Dichlorbenzidin mit feinverteiltem 1-Acetoacetylamino-2,4-dimethylbenzol, in Gegenwart eines Tensides, erhaltene Kupplungssuspension ein.

Die Pigmentkonzentration der Suspension beträgt zweckmässig 1 bis 10, vorzugsweise 2 bis 8 Gew.-%.

Die thermische Nachbehandlung erfolgt unter guter Durchmischung, zweckmässigerweise unmittelbar in dem Reaktionsgefäss, in dem die Azokupplung durchgeführt wurde.

Die Dauer der thermischen Nachbehandlung ist abhängig von der Temperatur, die wiederum druckabhängig ist. Da erhöhte Arbeitsdrücke entsprechend aufwendige Druckgefässe erfordern, erhitzt man die Suspension zweckmässig unter intensivem Rühren auf etwa 120 bis 150°C. Hierbei dauert die Behandlung etwa 1/2 bis 5 h.

Die erfindungsgemässe Behandlung führt zu einem Pigment, das überraschenderweise im Viskositätsverhalten, in der Deckkraft und im Glanz vergleichbar ist mit einem Produkt, das gemäss den DE-AS Nrn. 2302481 und 2302509 im wässerig -organischen Medium nachbehandelt wurde. Demgegenüber zeichnet sich das erfindungsgemässe Verfahren jedoch durch besondere Einfachheit aus, da kein organisches Lösemittel eingesetzt und regeneriert werden muss.

Das Produkt zeigt – im Gegensatz zu dem vor der thermischen Nachbehandlung erhaltenen Kupplungsprodukt – beim Einarbeiten in eine Druckfarbe sehr gute Deckkraft und Fliessfähigkeit. Es ist in seinen anwendungstechnischen Eigenschaften einem Pigment vergleichbar, das 4 h bei 125°C in 40%igem wässerigem Isobutanol nachbehandelt wurde.

## Patentansprüche

1. Verfahren zur Verbesserung der Deckkraft und der Viskosität von Zubereitungen von Pigment Yellow 13, dadurch gekennzeichnet, dass das Rohpigment, in Gegenwart eines Tensides, in wässeriger Suspension auf Temperaturen über 100°C erhitzt wird.

2. Verfahren nach Anspruch 1, dadurch gekennzeichnet, dass die nach der Umsetzung von bisdiazotiertem 3,3' -Dichlorbenzidin mit feinverteiltem 1-Acetoacetylamino-2,4-dimethylbenzol, in Gegenwart eines Tensides, erhatene Kupplungssuspension als wässerige Suspension eingesetzt wird.

3. Verfahren nach einem der Ansprüche 1 oder 2, dadurch gekennzeichnet, dass die Pigmentkonzentration in der Suspension 1 bis 10, vorzugsweise 2 bis 8 Gew.-% beträgt.

4. Verfahren nach einem oder mehreren der Ansprüche 1 bis 3, dadurch gekennzeichnet, dass die thermische Nachbehandlung bei 120 bis 150°C während 1/2 bis 5 h durchgeführt wird.

5. Zubereitungen von Pigment Yellow 13 mit verbesserter Deckkraft und Viskosität, dadurch gekennzeichnet, das ein Pigment eingesetzt wird, das durch Erhitzen des Rohpigments in wässeriger Suspension, in Gegenwart eines Tensides, auf Temperaturen über 100°C erhalten wird.

6. Verwendung des Pigments Yellow 13 gemäss Anspruch 5 als Ersatz bleihaltiger Chromgelbpigmente in Druckfarben.

**Revendications**

1. Procédé pour améliorer le pouvoir couvrant et la viscosité de compositions à base de Pigment Yellow 13, caractérisé en ce qu'on chauffe le pigment brut en suspension aqueuse, en présence d'un surfactif, à des températures supérieures à 100°C.

2. Procédé selon la revendication 1 caractérisé en ce qu'on utilise, comme suspension aqueuse, la suspension de copulation qui a été obtenue après la réaction, en présence d'un surfactif, du bisdiazoïque de la dichloro-3,3'-benzidine avec l'acétoacétylamino-1-diméthyl-2,4-benzène finement divisé.

3. Procédé selon l'une des revendications 1 ou 2, caractérisé en ce que la concentration de la suspension en pigment est comprise entre 1 et 10, de préférence entre 2 et 8% en poids.

4. Procédé selon l'une des revendications 1 à 3, caractérisé en ce que le traitement complémentaire à chaud est effectué à une température de 120 à 150°C pendant 1/2 à 5 h.

5. Compositions à base de Pigment Yellow 13 ayant un pouvoir couvrant et une viscosité améliorés, caractérisées en ce qu'elles contiennent un pigment qui a été obtenu par chauffage du pigment brut en suspension aqueuse, en présence d'un surfactif, à des températures supérieures à 100°C.

6. Application du Pigment Yellow 13 selon la revendication 5 comme produit de remplacement de pigments de jaune de chrome contenant du plomb, dans des encres d'imprimerie.

**Claims**

1. A process for improvement of hiding power and viscosity of preparations of Pigment Yellow 13, characterized in that the crude pigment is heated in the presence of a surfactant in an aqueous suspension to temperatures above 100°C.

2. The process as claimed in Claim 1, characterized in that the aqueous suspension used is the coupling suspension obtained after the reaction of bis-diazotized 3,3'-dichlorobenzidine with finely divided 1-acetoacetylamino-2,4-dimethylbenzene.

3. The process as claimed in one of Claims 1 or 2, characterized in that the pigment concentration in the suspension is to 10, preferably 2 to 8% by weight.

4. The process as claimed in one of Claims 1 to 3, characterized in that the thermal aftertreatment is carried out at 120 to 150°C for 1/2 to 5 h.

5. Preparations of Pigment Yellow 13 having improved hiding power and viscosity, characterized in that the pigment used is obtained by heating the crude pigment in aqueous suspension in the presence of a surfactant to temperatures above 100°C.

6. The use of Pigment Yellow 13 in accordance with Claim 5 for replacing lead-containing chrome yellow pigments in printing inks.